# EUROPÄISCHE PATENTSCHRIFT

(11) **EP 2 623 812 B1**
(45) Veröffentlichungstag und Bekanntmachung des Hinweises auf die Patenterteilung: **14.11.2018**
(21) Anmeldenummer: 13151399.6
(22) Anmeldetag: 16.01.2013
(51) Int. Cl.: F16D 3/62

(54) **Lasche für eine Torsionskupplung**
Tab for a torsion coupling
Patte de fixation pour un couplage de torsion

(30) Priorität: 02.02.2012 DE 102012001972
(43) Veröffentlichungstag der Anmeldung: 07.08.2013
(73) Patentinhaber: ZF Friedrichshafen AG, 88046 Friedrichshafen (DE)
(72) Erfinder: Somschor, Bernd, 88069 Tettnang (DE); Sacher, Christoph, 88048 Friedrichshafen (DE); Rothe, Joachim, 84453 Mühldorf (DE); Spaan, Wolfgang, 84559 Kraiburg am Inn (DE)

(56) Entgegenhaltungen:
- DE-A1-102008 022 475
- DE-A1-102008 050 202
- DE-C2- 3 526 273
- FR-E- 31 968
- JP-A- H0 396 718
- JP-A- H0 488 211
- JP-A- H06 129 440

## Beschreibung

Die Erfindung betrifft eine Lasche für eine Torsionskupplung mit
a) einem elastomerenKörper;
b) zwei in den elastomeren Körper eingebetteten Befesti - gungselementen, die jeweils eine den elastomeren Körper durchsetzende Buchse aufweisen;
c) einem endlosen, um die Buchsen der Befestigungselemente geschlungenen Fadenpaket;
d) zwei auf gegenüberliegenden Endbereichen der Buchse befestigten Kragenhülsen, zwischen denen das Fadenpaket in seinen Umlenkbereichen geführt ist.

Nicht schaltbare elastische Drehverbindungselemente werden zum Zweck der Drehmomenten übertragenden Verbindung zwischen zwei Wellenanschlüssen verbaut. Sie besitzen zur sicheren Drehmomentenübertragung in einen elastomeren Körper eingebettete Fadenpakete, die jeweils zwei Befestigungselemente, die als Verschraubungspunkte dienen, miteinander verbinden. Sinn dieser Drehverbindungselemente ist neben der Drehmomentenübertragung die Schwingungsisolierung und die akustische Abkopplung der beiden Wellen voneinander.

Bei einer ersten Bauweise von elastischen Drehverbindungselementen ist eine Mehrzahl von Befestigungselementen und diese miteinander verbindenden Fadenpaketen insgesamt in einen elastischen Körper eingebettet. Man spricht dann häufig von einer elastischen Gelenkscheibe.

Bei einer anderen Bauweise, mit der sich die vorliegende Erfindung befasst, sind die Drehverbindungselemente aus einer Mehrzahl einzelner Laschen zusammengesetzt, die jeweils einen eigenen elastomeren Körper und zwei durch ein Fadenpaket miteinander verbundene Befestigungselemente besitzen. Bei dieser Bauweise eines Drehverbin dungselements wird häufig von einer Torsionskupplung gesprochen.

Eine Lasche der eingangs genannten Art und eine von einer Vielzahl derartiger Laschen Gebrauch machendene Torsionskupplung ist in der DE 35 26 273 C3 beschrieben. Das hier eingesetzte Fadenpaket besitzt ein verhältnismäßig großes Verhältnis von Höhe zu Breite. Unter Höhe wird vorliegend die Dimension des Fadenpaketes verstanden, die parallel zur Achse der Buchsen (und damit auch parallel zur Mittelachse der Lasche) verläuft. Breite B ist diejenige Dimension des Fadenpakets, die in den Umlenkberei - chen radial verläuft. Im Allgemeinen ist die Breite des Fadenpakets durchgängig dieselbe. Wenn oben auf den Umlenkbereich Bezug genommen wurde, so nur deshalb, weil hier der Begriff "radial" gut definiert ist.

Aus Figur 4 der DE 35 26 273 C3 lässt sich ein Verhältnis von Höhe H zur Breite B herauslesen, das nahe an 3 liegt. Nachteil dieser Bauweise ist ein verhältnismäßig großes Widerstandsmoment der Lasche, welches die Beugewinkelfähigkeit der hieraus entstandenen Torsionskupplung beeinträchtigt. Um diesen Effekt möglichst gering zu halten, wird in der DE 35 26 273 C3 die Mittelöffnung sehr nahe an das Fadenpaket herangeführt. Ergebnis ist eine nur minimale Überdeckung des Fadenpakets mit elastomerem Material im Mittelbereich. Dies führt zu einem erhöhten Verschleiß, da das Fadenpaket bereits nach kurzem Betrieb austritt und die einzelnen Fäden sich auf Grund der Relativbewegung zueinander sehr schnell aufreiben. Dieser Effekt wird durch die Erhöhung des Beugewinkels noch beschleunigt.

Aufgabe der vorliegenden Erfindung ist es, eine Lasche der eingangs genannten Art so auszugestalten, dass ihre spezifische Leistung und Beugewinkelfähigkeit erhöht wird.
Diese Aufgabe wird dadurch gelöst, dass
e) das Verhältnis von Höhe H zur Breite B des Fadenpakets (7) kleiner als 2 ist.
Durch die "flache" Ausgestaltung des Fadenpakets entsteht eine Lasche, die ein vergleichsweise geringes Widerstandsmoment besitzt. Bereits diese Maßnahme erhöht die Beugewinkelfähigkeit der Lasche innerhalb der Torsionskupplung. Hinzu kommt ein geringerer Verschleiß, was längere Standzeiten der Lasche ermöglicht.
Vorzugsweise ist das Verhältnis von Höhe H zur Breite B etwa gleich 1.
Eine weitere Verbesserung der erfindungsgemäßen Lasche, sowohl was die Beugewinkelfähigkeit als auch den Verschleiß angeht, wird dadurch erreicht, dass der elastomere Körper im mittleren Bereich zwischen den Befestigungselementen eine reduzierte Dicke besitzt. Diese reduzierte Dicke wird auf Grund der flachen Form des Fadenpakets erst möglich, wobei gleichwohl noch eine ausreichende Überdeckung des Fadenpaketes mit dem elastomeren Material gewährleistet ist.

Ein Ausführungsbeispiel der Erfindung wird nachfolgend anhand der Zeichnung näher erläutert; es zeigen
- Figur 1: die Draufsicht auf die Lasche einer Torsionskupplung;
- Figur 2: einen Schnitt gemäß II-II von Figur 1;
- Figur 3: die Seitenansicht der Lasche der Figuren 1 und 2;
- Figur 4: einen Schnitt gemäß IV- IV von Figur 3.

Die in der Zeichnung dargestellte und insgesamt mit dem Bezugszeichen 1 gekennzeichnete Lasche ist für eine Torsionskupplung bestimmt, wie sie in ihrem grundsätzlichen Aufbau und ihrem Verwendungszweck in der oben schon genannten DE 35 26 273 C3 beschrieben ist. Hierauf wird Bezug genommen.

Die Lasche 1 umfasst einen elastomeren Körper 2 mit einer im dargestellten Fall die Form einer liegenden 8 aufweisenden Mittelöffnung 3. Der elastomere Körper 2 ist in der Draufsicht länglich und weist im dargestellten Ausführungsbeispiel eine ovale Form auf.

Eingebettet in den elastomeren Körper 2 sind zwei Befesti gungselemente 4 und 5, von denen jedes eine hohlzylindrische, metallische Buchse 6 aufweist, die sich von der oberen zur unteren Stirnseite des elastomeren Körpers 2 erstreckt.

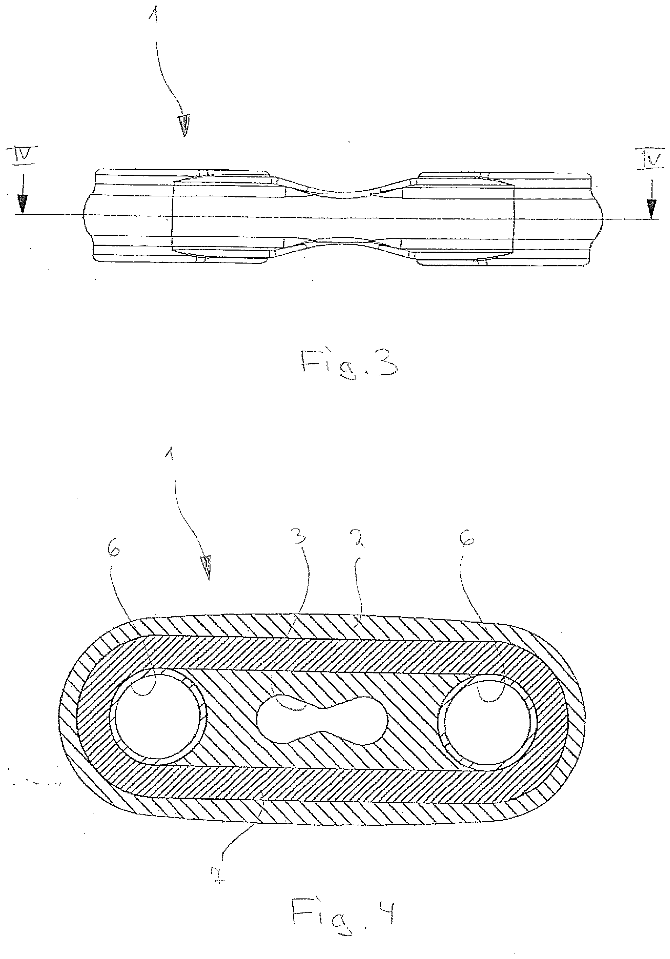

Um die Buchsen 6 der beiden Befestigungselemente 4, 5 ist ein endloses Fadenpaket 7 geschlungen, welches im Schnitt der Figur 4 eine ovale, der Außenkontur des elastomeren Körpers 2 folgende Gestalt besitzt . Das Fadenpaket 7 wird auf den Buchsen 6 jeweils durch eine obere Kragenhülse 8 und eine untere Kragenhülse 9 positioniert. Jede Kragenhülse 8, 9 umfasst einen kurzen, rohrförmigen Ansatz 8a, 9a, der zur Buchse 6 koaxial ist und auf dieser verpresst ist. Ein radial sich erstreckender Kragen 8a bzw. 9b der Kragenhülse 8 , 9 liegt von oben bzw. unten im Umschlingungsbereich an dem Fadenpaket 7 an.

Das Fadenpaket 7 ist verhältnismäßig flach. Darunter wird verstanden, dass seine Höhe, also die Dimension parallel zur Mittelachse der Lasche 1 und damit auch zu den Achsen der Buchsen 6, verglichen mit der Breite, also der im Umlenkbereich radialen Dimension, verhältnismäßig klein ist Unter "verhältnismäßig klein" wird vorliegend ein Verhältnis von H:B kleiner als etwa 2 verstanden. Im vorliegenden Falle beträgt dieses Verhältnis etwa 1,12. Es liegt dabei sehr nahe an einem bevorzugten Wert von etwa 1.

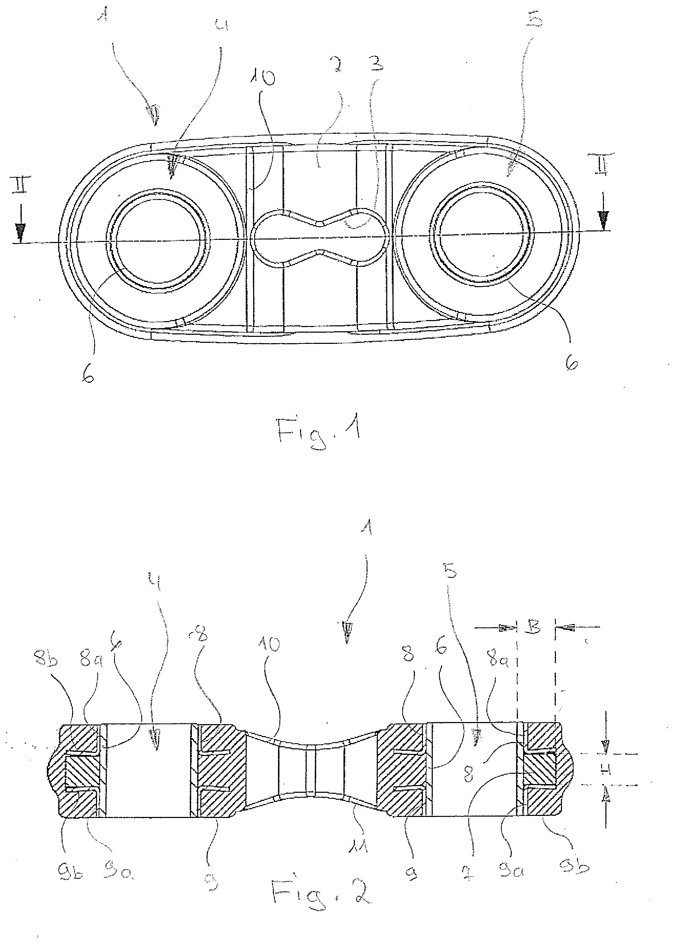

Wie sich der Figur 2 entnehmen lässt, besitzt der elastomere Körper 2 in der Mitte zwischen den beiden Befestigungselementen 4, 5 von der oberen und unteren Stirnseite her Auskehlungen 10, 11, so dass die Höhe des elastomeren Körpers 2 in der Mittelebene am kleinsten ist.

Beide geschilderten Maßnahmen, also sowohl das verhältnismäßig kleine Verhältnis von Höhe zu Breite als auch die Auskehlungen 10, 11 im mittleren Bereich des elastomeren Körpers 2, dienen im Wesentlichen demselben Zweck, nämlich der Minimierung des Widerstandsmomentes der Lasche 1. Auf Grund der Flachheit des Fadenpakets 7 bleibt auch im dünneren mittleren Bereich eine Elastomerüberdeckung des Fadenpakets 7 gewährleistet.

## Patentansprüche

1. Lasche für eine Torsionskupplung mit
a) einem elastomeren Körper;
b) zwei in den elastomeren Körper eingebetteten Befestigungselementen, die jeweils eine den elastomeren Körper durchsetzende Buchse aufweisen;
c) einem endlosen, um die Buchsen der Befestigungselemente geschlungenen Fadenpaket;
d) zwei auf gegenüberliegenden Endbereichen der Buchse befestigten Kragenhülsen, zwischen denen das Fadenpaket in seinen Umlenkbereichen geführt ist wobei jede Kragenhülse (8, 9) einen kurzen,rohrförmigen Ansatz (8a, 9a) umfasst, der zur Buchse (6) koaxial ist und auf dieser verpresst ist, und ein radial sich erstreckender Kragen (8a bzw. 9b) der Kragenhülse (8, 9) von oben bzw. unten im Umschlingungsbereich an dem Fadenpaket (7) anliegt, **dadurch gekennzeichnet, dass**
e) das Verhältnis von Höhe H zur Breite B des Fadenpakets (7) kleiner als 2 ist,
wobei
H die Dimension des Fadenpakets (7) in Richtung der Achse der Buchsen (6) und B die radiale Dimension des Fadenpakets (7) in dessen Umlenkbereichen ist.

2. Lasche nach Anspruch 1, **dadurch gekennzeichnet,**
**dass** das Verhältnis von Höhe H zur Breite B etwa gleich 1 ist.

3. Lasche nach Anspruch 1 oder 2, **dadurch gekennzeichnet, dass** der elastomere Körper (2) im mittleren Bereich zwischen den Befestigungselementen (4, 5) eine reduzierte Dicke (Höhe) besitzt.

## Claims

1. Tab for a torsional coupling having
a) an elastomeric body;
b) two fastening elements which are embedded into the elastomeric body and in each case have a bush which penetrates the elastomeric body;
c) an endless thread bundle which is looped around the bushes of the fastening elements;
d) two flanged sleeves which are fastened on opposite end regions of the bush and between which the thread bundle is guided in its deflection regions, each flanged sleeve (8, 9) comprising a short, tubular extension (8a, 9a) which is coaxial with respect to the bush (6) and is pressed on the latter, and a radially extending collar (8a and 9b) of the flanged sleeve (8, 9) bearing from above and below, respectively, against the thread bundle (7) in the wraparound region,
**characterized in that**
e) the ratio of the height H to the width B of the thread bundle (7) is smaller than 2,
H being the dimension of the thread bundle (7) in the direction of the axis of the bushes (6), and B being the radial dimension of the thread bundle (7) in its deflection regions.

2. Tab according to Claim 1, **characterized in that** the ratio of the height H to the width B is approximately equal to 1.

3. Tab according to Claim 1 or 2, **characterized in that** the elastomeric body (2) has a reduced thickness (height) in the central region between the fastening elements (4, 5) .

## Revendications

1. Patte pour un couplage de torsion, comprenant :
a) un corps en élastomère ;
b) deux éléments de fixation noyés dans le corps en élastomère, lesquels présentent chacun une douille traversant le corps en élastomère ;
c) un paquet de fils sans fin enveloppé autour des douilles des éléments de fixation ;
d) deux douilles bridées fixées sur des régions d'extrémité opposées de la douille, entre lesquelles le paquet de fils est guidé dans ses régions de renvoi, chaque douille bridée (8, 9) comprenant une pièce courte tubulaire (8a, 9a) qui est coaxiale à la douille (6) et qui est pressée sur celle-ci, et une bride (8a, 9a) de la douille bridée (8, 9), s'étendant radialement, s'appliquant par le haut ou par le bas dans la région d'enveloppement contre le paquet de fils (7),
**caractérisée en ce que**
e) le rapport de la hauteur H à la largeur B du paquet de fils (7) est inférieur à 2,
H étant la dimension du paquet de fils (7) dans la direction de l'axe des douilles (6) et B étant la dimension radiale du paquet de fils (7) dans ses régions de renvoi.

2. Patte selon la revendication 1, **caractérisée en ce que** le rapport de la hauteur H à la largeur B est environ égal à 1.

3. Patte selon la revendication 1 ou 2, **caractérisée en ce que** le corps en élastomère (2) possède une épaisseur réduite (hauteur) dans la région centrale entre les éléments de fixation (4, 5).
